# EUROPÄISCHE PATENTSCHRIFT

(11) **EP 2 434 195 B1**
(45) Veröffentlichungstag und Bekanntmachung des Hinweises auf die Patenterteilung: **13.03.2013**
(21) Anmeldenummer: 10010284.7
(22) Anmeldetag: 23.09.2010
(51) Int. Cl.: F16L 53/00, B60R 1/06, B60S 1/48, F02M 37/22, F02M 31/125, H05B 3/44

(54) **Verfahren zur Temperaturmessung in einem Fahrzeug**
Method for temperature measurement in a vehicle
Procédé de mesure de température dans un véhicule

(43) Veröffentlichungstag der Anmeldung: 28.03.2012
(73) Patentinhaber: Massold, Andreas, 72336 Balingen (DE); Sommer, Frank, 72336 Balingen (DE)
(72) Erfinder: Massold, Andreas, 72336 Balingen (DE); Sommer, Frank, 72336 Balingen (DE)
(74) Vertreter: Späth, Dieter

(56) Entgegenhaltungen:
- EP-A1- 1 675 434
- EP-A1- 1 764 541
- DE-A1-102006 030 454
- DE-A1-102006 034 077
- DE-A1-102006 051 724
- DE-U1- 9 116 824
- DE-U1- 29 923 550
- DE-U1-202007 007 125

## Beschreibung

Die Erfindung betrifft ein Verfahren zur Temperaturmessung mit einem elektrisch beheizbaren Kunststoffteil für ein Fahrzeug mit den Merkmalen des Oberbegriffs des Anspruchs 1. Gemeint ist insbesondere ein Kunststoffteil eines Kraftfahrzeugs, es kann sich allerdings auch um ein anderes Land-, ein Wasser- oder Luftfahrzeug handeln. Das Kunststoffteil kann beispielsweise ein Gehäuse oder ein Halter eines Außen-Rückspiegels, eine Kraftstoffleitung, ein Gehäuse- oder sonstiges Teil eines Kraftstofffilters, eine Spritzdüse oder ein Schlauch einer Scheibenwaschanlage sein. Weitere Anwendungsmöglichkeiten der Erfindung sind ein Frisch- oder ein Abwassertank oder ein Klo eines Wohnmobils oder Wohnanhängers. Die Aufzählung ist nicht abschließend

Das Gebrauchsmuster DE 299 23 550 U1 offenbart einen elektrisch beheizbaren Schlauch für eine Scheibenwaschanlage eines Kraftwagens. Der Schlauch weist zwei elektrische Widerstandsheizdrähte auf, die parallel nebeneinander in Längsrichtung des Schlauchs verlaufen und in einer Schlauchwand eingebettet sind. An einem Ende des Schlauchs sind die beiden Heizdrähte mittels einer Steckverbindung mit einer Heizschlinge verbunden, die sich in einem Spritzdüsengehäuse befindet. Am anderen Ende sind die beiden Heizdrähte zum Heizen elektrisch kontaktierbar.

Die Offenlegungsschrift DE 10 2006 051 724 A1 offenbart eine Kraftstoffleitung mit einem Kraftstoffschlauch, an dem außen vier Kanäle mit Rechteckquerschnitten als Rückleitungen angeordnet sind, durch die Kraftstoff zurückfließt, wenn eine an den Kraftstoffschlauch angeschlossene Einspritzdüse geschlossen ist. Die Kanäle weisen Abstände voneinander auf und in Zwischenräumen zwischen den Kanälen sind jeweils gegenüberliegend zwei Paare elektrischer Leitungen angeordnet, von denen ein paar hochohmig als Heizleiter und das andere Paar niederohmig ist. An einem einspritzdüsenseitigen Ende der Kraftstoffleitung sind die hochohmige- und die niederohmige Leitung jedes Leitungspaares elektrisch leitend miteinander verbunden. Mit den niederohmigen Leitungen lässt sich ein Magnetventil der Einspritzdüse schalten, an den hochohmigen Leitungen oder an einer hochohmigen- und der niederohmigen Leitung des anderen Leitungspaares lässt sich mit einem Instrumentenverstärker eine elektrische Spannung an einer Spule des Magnetventils der Einspritzdüse messen und aus der Spannung die Temperatur ermitteln. Zur Beheizung der Kraftstoffleitung wird ein konstanter Strom durch die durch ihre elektrisch leitende Verbindung in Reihe geschalteten hoch- und niederohmigen Leitungen der beiden Leitungspaare geleitet, wobei jeweils der die hochohmige Leitung durch ihren elektrischen Widerstand die Kraftstoffleitung beheizt.

Das Gebrauchsmuster DE 20 2007 007 125 U1 offenbart ein elektrisches Heizkabel, das die Form eines Koaxialkabels mit einem elektrischen Leiter im Zentrum und einem schlauchförmigen zweiten elektrischen Leiter, der den ersten elektrischen Leiter nach Art einer Schirmung koaxial umschließt, aufweist. Zwischen den beiden elektrischen Leitern befindet sich eine schlauchförmige, elektrisch isolierende Ummantelung, ebenso ist der zweite elektrische Leiter elektrisch isolierend ummantelt. An einem Ende des Heizkabels sind die beiden elektrischen Leiter elektrisch leitend miteinander verbunden und mindestens einer der beiden Leiter weist einen hohen elektrischen Widerstand auf, so dass er bei Bestromung heizt. Das Heizkabel, das keinen freien Querschnitt aufweist und nicht als Fluidleitung verwendbar ist, kann zum Beheizen in eine Fluidleitung eingebracht werden.

Die europäische Patentanmeldung EP 1 675 434 A1 offenbart ein Heizkabel, das dem vorstehend beschriebenen Heizkabel des Gebrauchsmusters DE 20 2007 007 125 U1 entspricht, mit der Maßgabe, dass das Heizkabel der europäischen Patentanmeldung nicht als Koaxialkabel ausgebildet ist, sondern zwei elektrische Leiter nebeneinander aufweist.

Die europäische Patentanmeldung EP 1 764 541 A1 offenbart eine elektrische Heizleitung mit einem Heizleiter und zwei Stromversorgungsleitungen, mit denen der Heizleiter abwechselnd in Abständen verbunden ist, so dass Abschnitte des Heizleiters jeweils an die beiden Stromversorgungsleitungen angeschlossen sind: Zum Beheizen eines Schlauchs kann die Heizleitung wendelförmig um den Schlauch gewickelt sein.

Aufgabe der Erfindung ist eine Temperaturmessmöglichkeit mit einem elektrisch beheizbaren Kunststoffteil vorzuschlagen.

Diese Aufgabe wird erfindungsgemäß dadurch gelöst, dass zwei elektrische Widerstandsheizleiter eines Kunststoffteils ein Thermoelement bilden und dass zu einer Temperaturmessung ein Heizstrom abgeschaltet wird. Die beiden Heizleiter sind an einer Verbindungsstelle elektrisch leitend miteinander verbunden und bestehen aus verschiedenen Materialien, so dass sie das Thermoelement bilden. Die Verbindungsstelle bildet eine Temperaturmessstelle, die beispielsweise bei einem Schlauch nicht an dessen Ende angeordnet sein muss. Eine Temperaturdifferenz zwischen der Verbindungsstelle und den elektrischen Anschlüssen der Heizleiter bewirkt eine elektrische Spannung zwischen den elektrischen Anschlüssen, die zur Messung der Temperatur an der Verbindungsstelle der beiden Heizleiter verwendet wird, wobei zur Temperaturmessung der Heizstrom abgeschaltet wird. Die Heizleiter können aus Metallen, Halbleitermaterialien, die beispielsweise unterschiedlich dotiert sind, elektrisch leitfähigen Kunststoffen oder Kombinationen solcher Materialien bestehen. Die Materialaufzählung ist nicht abschließend. Wesentlich ist, dass eine Temperaturdifferenz zwischen der Verbindungsstelle der Heizleiter und ihren elektrischen Anschlüssen eine elektrische Spannung zwischen den elektrischen Anschlüssen erzeugt, die zur Ermittlung der Temperatur an der Verbindungsstelle messbar ist.

Die Erfindung hat den Vorteil, dass die zum Heizen notwendigen Heizleiter zusätzlich zur Temperaturmessung verwendet werden. Dadurch können die Heizelemente gezielt bestromt werden, wenn die Gefahr eines Beschlagens oder Vereisens beispielsweise eines Außen-Rückspiegels, eines Schlauchs oder einer Spritzdüse für Scheibenwaschwasser oder eines sog. Versulzens (Bildung von Paraffinkristallen) von Dieselkraftstoff besteht. Die Vermeidung des Vereisens ist beispielsweise auch eine Anwendung der Erfindung für Luftfahrzeuge. Auch kann Kraftstoff, unabhängig ob Benzin, Diesel oder Kerosin, auf eine vorgebbare Mindesttemperatur zwecks Benzineinsparung vorgewärmt werden. Das ist etwas anderes als das "Versulzen" von Dieselkraftstoff und erfolgt grundsätzlich auf eine höhere Temperatur.

Eine Ausgestaltung der Erfindung sieht vor, dass die Heizleiter in den Kunststoff eingebettet, beispielsweise mit dem Kunststoff umspritzt sind. Die Heizleiter sind dadurch sowohl vor einem Fluidkontakt geschützt, wenn das Kunststoffteil fluidführend ist, als auch vor einem Kontakt nach außen, der beispielsweise zu einem Kurzschluss führen könnte.

Eine Ausgestaltung der Erfindung sieht vor, dass das Kunststoffteil ein Behältnis ist. Unter Behältnis ist beispielsweise ein Schlauch oder Rohr für beispielsweise Kraftstoff oder Wasser, oder ein Gehäuse oder auch ein Teil eines Gehäuses beispielsweise eines Kraftstofffilters oder einer Scheibenwaschdüse gemeint. Mit dieser Ausgestaltung der Erfindung lässt sich erreichen, dass beispielsweise Scheibenwaschwasser nicht einfriert, Dieselkraftstoff nicht versulzt oder Kraftstoff allgemein mit einer vorgegebenen Mindesttemperatur zu einer Brennkraftmaschine gelangt. Da sich die Temperatur des Fluids messen lässt, lässt sich ein unnötiges Heizen auf eine Temperatur über der notwendigen Temperatur vermeiden.

Eine Weiterbildung sieht vor, dass mindestens ein Heizleiter wendelförmig einen Innenraum des Behältnis umschließend in einer Wandung des Behältnis angeordnet ist. Die wendelförmige, den Innenraum des Behältnis umschließende Anordnung eines oder mehrerer Heizleiter bewirkt eine verhältnismäßig große Kontaktfläche für den Wärmeübergang. Die Wendelform des Heizleiters ist sowohl in einem Schlauch oder zylindrischen Gehäuse oder Gehäuseteil als auch in einem beispielsweise kegelförmigen Gehäuse oder Gehäuseteil möglich.

Eine Ausgestaltung der Erfindung sieht Paare elektrischer Widerstandsheizleiter vor, von denen jeweils zwei als Paar an einer Verbindungsstelle elektrisch leitend miteinander verbunden sind. An ihren anderen Enden können jeweils ein Heizleiter eines Heizleiterpaars mit einem Heizleiter eines anderen Heizleiterpaars verbunden, die Heizleiterpaare also elektrisch in Serie geschaltet, oder es können die Heizleiterpaare elektrisch parallel geschaltet oder getrennt kontaktiert werden. Diese Ausgestaltung der Erfindung ermöglicht u.a. eine Alternative zu einer wendelförmigen Anordnung, die Heizleiter können parallel zueinander in Längsrichtung eines Schlauchs oder zylindrischen Gehäuses oder Gehäuseteils angeordnet sein. Trotzdem wird der Schlauch oder das Gehäuse über den gesamten Umfang beheizt. Ein anderer Vorteil dieser Ausgestaltung der Erfindung ist die Möglichkeit der Temperaturmessung an verschiedenen, in Längs- und/oder Umfangsrichtung verteilten Stellen.

Eine Ausgestaltung der Erfindung sieht vor, die Heizleiter zu verdrillen, was eine platzsparende Anordnung ermöglicht. Die Heizleiter müssen in diesem Fall elektrisch isoliert sein.

Die Heizleiter können beispielsweise aus Draht bestehen oder als Leiterbahnen ausgeführt sein. Die Leiterbahnen können Folien sein, sie können aufgedampft oder chemisch wie beispielsweise von Leiterplatten bekannt aufgebracht sein. Auch beispielsweise aus Blech gestanzte Leiterbahnen sind möglich. Diese Ausgestaltung der Erfindung ermöglicht vielgestaltige räumliche Anordnungsmöglichkeiten der Heizleiter.

Die Erfindung wird nachfolgend anhand in der Zeichnung dargestellter Ausführungsbeispiele näher erläutert. Es zeigen:
- Figuren 1 und 2: zwei elektrisch beheizbare Schläuche gemäß der Erfindung;
- Figur 3: ein elektrisch beheizbares Filtergehäuseteil gemäß der Erfindung; und
- Figur 4: einen Außen-Rückspiegel für ein Kraftfahrzeug mit einem elektrisch beheizbaren Halter gemäß der Erfindung in Explosionsdarstellung.

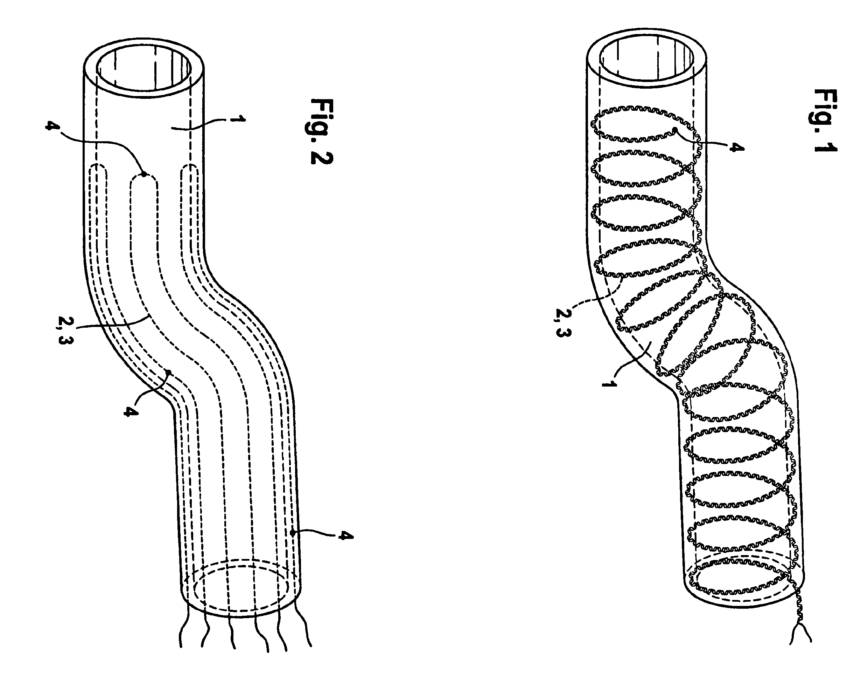

Der in Figur 1 gezeigte Schlauch 1 gemäß der Erfindung besteht aus Kunststoff oder Gummi und ist als Kraftstoff- oder Waschwasserschlauch vorgesehen; andere Verwendungen sind nicht ausgeschlossen. In eine Wandung des Schlauchs 1 sind zwei Metalldrähte 2 eingebettet, die elektrische Widerstandsheizleiter 3 bilden. Die beiden Drähte 2 sind vollständig vom Kunststoff oder Gummi der Wandung des Schlauchs 1 umschlossen, sie gelangen weder an einer Außennoch an einer Innenseite an eine Oberfläche des Schlauchs 1. Die beiden Drähte 2 weisen eine elektrisch isolierende Umhüllung auf, damit sie nicht in elektrisch leitenden Kontakt miteinander kommen, und sind miteinander verdrillt. Die beiden Drähte 2 verlaufen wendelförmig in der Wandung des Schlauchs 1. Nahe einem Ende des Schlauchs 1 sind die beiden Drähte 2 an einer Verbindungsstelle 4 durch Laserschweißen oder in anderer Weise elektrisch leitend miteinander verbunden. An einer anderen Stelle oder an einem anderen Ende treten die beiden Drähte 2 zum elektrischen Kontaktieren mit einer nicht dargestellten Stromquelle aus dem Schlauch 1 aus. Durch Bestromen der beiden Drähte 2, die die Heizleiter 3 bilden, ist der Schlauch 1 beheizbar.

Die beiden Drähte 2 bestehen aus verschiedenen Metallen und bilden dadurch ein Thermoelement, mit dem sich eine Temperatur an der Verbindungsstelle 4 messen lässt, wobei zur Temperaturmessung die Bestromung abgeschaltet und eine Thermospannung an den aus dem Schlauch 1 austretenden Enden der Drähte 2 gemessen wird. Die Verbindungsstelle 4 kann sich anders als gezeichnet auch an einer anderen Stelle als an einem Ende des Schlauchs 1 befinden. Durch die Möglichkeit der Temperaturmessung kann ein Fluid im Schlauch 1 gezielt über einer vorgegebenen Temperatur gehalten werden ohne dass auf eine unnötig hohe Temperatur geheizt werden muss. Es lässt sich beispielsweise Kraftstoff zur Kraftstoffeinsparung auf eine vorgegebene Temperatur vorwärmen, ein "Versulzen" (Bildung von Paraffinkristallen) von Dieselkraftstoff oder ein Gefrieren von Wasser vermeiden.

In Figur 2 sind Drähte 2 aus je zwei verschiedenen metallen paarweise an Verbindungsstellen 4 elektrisch leitend miteinander verbunden. Wie in Figur 1 sind die Drähte 2 in eine Wandung eines Schlauchs 1 eingebettet, allerdings sind die Drähte 2, die auch in Figur 2 elektrische Widerstandsheizleiter 3 bilden, nicht wendelförmig, sondern in Längsrichtung des Schlauchs 1 verlaufend parallel nebeneinander angeordnet. Dabei sind die Drähte 2 über einen Umfang des Schlauchs 1 verteilt angeordnet, so dass eine Schlauchwandung über ihren gesamten Umfang beheizbar ist. Durch die Verbindungsstellen 4 und zwei verschiedene Metalle für die beiden ein Paar bildenden Drähte 2 bilden diese Thermoelemente, mit denen sich eine Temperatur an den Verbindungsstellen 4 messen lässt. Die Verbindungsstellen 4 können an in Längsrichtung verschiedenen Stellen des Schlauchs 1 angeordnet sein, so dass eine Temperaturmessung an in Längsrichtung verschiedenen Stellen des Schlauchs 1 möglich ist. Die Drähte 2 des Schlauchs 1 aus Figur 2 benötigen keine elektrische Isolierung, weil sie mit Ausnahme der Verbindungsstellen 4 voneinander beabstandet und durch den Kunststoff oder Gummi der Wandung des Schlauchs 1 sowohl voneinander als auch zur Schlauchaußen- und -innenseite elektrisch isoliert sind.

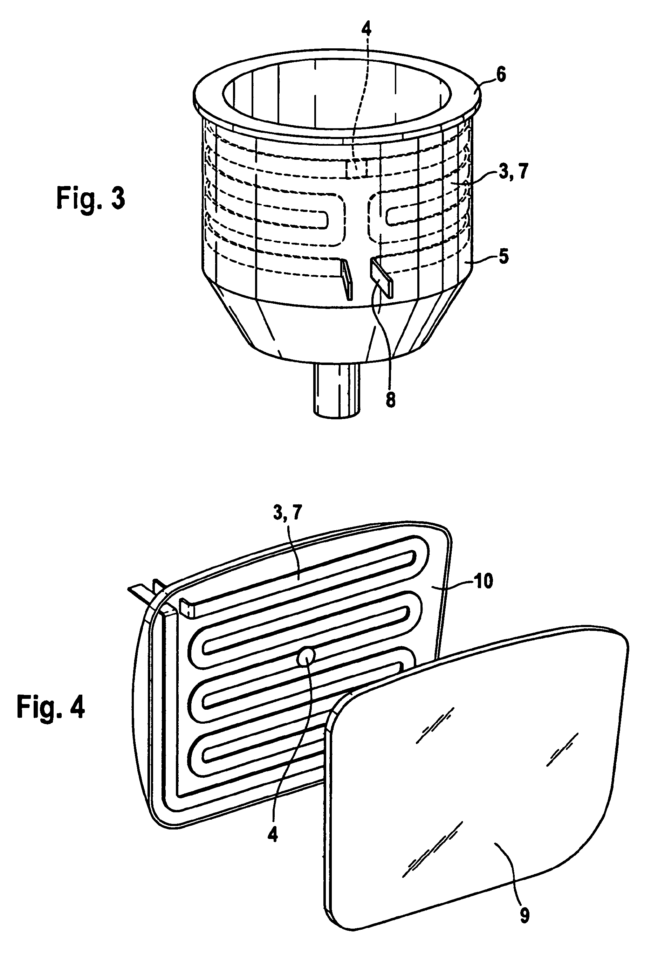

Figur 3 zeigt ein Filtergehäuseteil eines Kraftstoff- oder sonstigen Filters. Das Gehäuseteil 5 ist napfförmig und weist einen Flansch 6 aus Kunststoff zum Verschweißen oder Verkleben mit einem nicht dargestellten Gehäusedeckel auf. Vor dem Verschließen des Gehäuseteils 5 mit dem nicht dargestellten Deckel wird ein ebenfalls nicht dargestelltes Filter entweder im Deckel oder im Gehäuseteil 5 angeordnet. In eine Wandung des Gehäuseteils 5 sind zwei mäanderförmig verlaufende, aus Blech gestanzte und halbzylinderförmig gebogene Leiterbahnen 7 eingebettet. Die beiden Leiterbahnen 7 bestehen aus verschiedenen Metallen und sind an einer Verbindungsstelle 4 elektrisch leitend miteinander verbunden, so dass sie ein Thermoelement bilden, mit dem sich eine Temperatur an der Verbindungsstelle 4 messen lässt. Der Verbindungsstelle 4 ferne Enden der Leiterbahnen 7 sind nach außen umgebogen und treten aus dem Filtergehäuseteil 5 aus, so dass sie elektrisch kontaktierbar sind. Die Leiterbahnen 7 bilden wie gesagt ein Thermoelement und elektrische Widerstandsheizleiter 3, mit denen das Filtergehäuseteil 5 beheizbar ist.

Figur 4 zeigt einen Außen-Rückspiegel 9 mit einem plattenförmigen Halter 10, auf den der Rückspiegel 9 mit seiner Rückseite aufgeklebt wird. Ein Gehäuse des Außen-Rückspiegels ist nicht dargestellt. Der plattenförmige Halter 10 besteht aus Kunststoff, zur Versteifung kann er auf seiner in der Zeichnung nicht sichtbaren Rückseite Rippen aufweisen. Auf einer dem Rückspiegel 9 zugewandten Vorderseite weist der Halter 10 zwei mäanderförmige Leiterbahnen 7 auf, die beispielsweise als Folienstreifen auf den Halter 10 aufgeklebt oder wie Leiterbahnen auf eine Leiterplatte aufgebracht sein können. Die beiden Leiterbahnen 7 bilden elektrische Widerstandheizleiter 3. An einer Verbindungsstelle 4 überlappen sich die beiden Leiterbahnen 7 und sind elektrisch leitend miteinander verbunden. Die beiden Leiterbahnen 7 bestehen aus verschiedenen Metallen, so dass sie ein Thermoelement bilden, mit dem eine Temperatur an der Verbindungsstelle 4 messbar ist. Die jeweils anderen Enden der Leiterbahnen 7 sind durch den plattenförmigen Halter 10 durchgeführt um die Leiterbahnen 7 elektrisch kontaktieren zu können. Der Halter 10 bildet ein elektrisch beheizbares Kunststoffteil im Sinne der Erfindung.

Durch die Ausbildung der beiden Leiterbahnen 7 als Thermoelement lässt sich wie gesagt eine Temperatur an der Verbindungsstelle 4 messen um den Rückspiegel 9 zu beheizen wenn Frostgefahr besteht, um ein Beschlagen und Reifbildung zu vermeiden bzw. Reif abzutauen. Zur Temperaturmessung wird ein Heizstrom durch die Leiterbahnen 7, die elektrische Widerstandsheizleiter 3 bilden, abgestellt. Es ist möglich, die Leiterbahnen 7 in den Kunststoff des Halters 10 einzubetten anstatt sie wie dargestellt auf einer Oberfläche des Halters 10 anzuordnen. Die Erfindung ist nicht auf ebene Bauteile wie den plattenförmigen Halter 10 des Außen-Rückspiegels 9 beschränkt, die Leiterbahnen 7, die die elektrischen Widerstandsheizleiter 3 und ein Thermoelement bilden, können auch auf nicht bzw. in nicht ebenen, beispielsweise gekrümmten oder Kanten aufweisenden Kunststoffteilen angeordnet werden (nicht dargestellt).

## Patentansprüche

1. Verfahren zur Temperaturmessung mit einem elektrisch beheizbaren Kunststoffteil (1; 5; 10) für ein Fahrzeug, wobei das Kunststoffteil zwei elektrische Widerstandsheizleiter (3) aufweist, die aus verschiedenen Materialien bestehen und die an einer Verbindungsstelle (4) elektrisch leitend miteinander verbunden sind, so dass sie ein Thermoelement bilden, das zur Messung einer Temperatur an der Verbindungsstelle (4) verwendbar ist, **dadurch gekennzeichnet, dass** zur Temperaturmessung ein Heizstrom abgeschaltet wird.

2. Verfahren nach Anspruch 1, **dadurch gekennzeichnet, dass** die Heizleiter (3) in den Kunststoff eingebettet sind.

3. Verfahren nach Anspruch 1 oder 2, **dadurch gekennzeichnet, dass** das Kunststoffteil (1; 5) ein Behältnis ist.

4. Verfahren nach Anspruch 3, **dadurch gekennzeichnet, dass** mindestens ein Heizleiter (3) wendel- oder mäanderförmig einen Innenraum des Behältnis umschließend an oder in einer Wandung des Behältnis angeordnet ist.

5. Verfahren nach einem der vorhergehenden Ansprüche, **dadurch gekennzeichnet, dass** das Kunststoffteil (1) Paare elektrischer Widerstandsheizleiter (3) aufweist, die an Verbindungsstellen (4) elektrisch leitend miteinander verbunden sind und aus verschiedenen Materialien bestehen, so dass sie Thermoelemente bilden, die zur Messung von Temperaturen an den Verbindungsstellen (4) verwendbar sind.

6. Verfahren nach einem der vorhergehenden Ansprüche, **dadurch gekennzeichnet, dass** die Heizleiter (3) verdrillt sind.

7. Verfahren nach einem der vorhergehenden Ansprüche, **dadurch gekennzeichnet, dass** ein Heizleiter (3) ein Draht (2) ist.

8. Verfahren nach einem der Ansprüche 1 bis 7, **dadurch gekennzeichnet, dass** ein Heizleiter (3) eine Leiterbahn (7) ist.

## Claims

1. Method for temperature measurement with a heated plastic part (1, 5, 10) for a vehicle, wherein the plastic part comprises two electrical resistance heating conductors (3) that consist of different materials and that are connected to one another in an electrically conductive manner at a connection point (4), so that they form a thermo element, that can be used to measure the temperature at the connection point (4), **characterized in that** a heating current is powered off for the temperature measurement.

2. Method as specified in claim 1, **characterized in that** the heating conductors (3) are embedded in the plastic.

3. Method as specified in claim 1 or claim 2, **characterized in that** the plastic part (1, 5) is a container.

4. Method as specified in claim 3, **characterized in that** at least one heating conductor (3) encompasses in a helical or serpentine manner an interior space of the container or, alternatively, is arranged on or in a wall of the container.

5. Method according to any one of the preceding claims, **characterized in that** the plastic part (1) has pairs of electrical resistance heating conductors (3) that are connected to one another in an electrically conductive manner at connection points (4) and that consist of different materials in such a manner that they form thermo elements that can be used to measure the temperature at the connection points (4).

6. Method according to any one of the preceding claims, **characterized in that** the heating conductors (3) are twisted.

7. Method according to any one of the preceding claims, **characterized in that** a heating conductor (3) is a wire (2).

8. Method as specified in any one of claims 1 to 7, **characterized in that** a heating conductor (3) is a conductor path (7).

## Revendications

1. Procédé de mesure de température au moyen d'une pièce en matière plastique (1 ; 5 ; 10) pouvant être chauffée électriquement pour un véhicule, la pièce en matière plastique présentant deux conducteurs électriques chauffants par effet Joule (3) qui sont composés de matériaux différents et qui sont reliés entre eux de manière électroconductrice à un point de liaison (4), de sorte qu'ils forment un thermocouple qui est utilisable pour mesurer une température au point de liaison (4), **caractérisé en ce qu'**un courant de chauffage est coupé pour la mesure de température.

2. Procédé selon la revendication 1, **caractérisé en ce que** les conducteurs chauffants (3) sont enrobés dans la matière plastique.

3. Procédé selon la revendication 1 ou 2, **caractérisé en ce que** la pièce en matière plastique (1,5) est un récipient.

4. Procédé selon la revendication 3, **caractérisé en ce qu'**au moins un conducteur chauffant (3) est disposé en forme de spirale ou de méandres entourant un espace intérieur du récipient sur ou dans une paroi du récipient.

5. Procédé selon une des revendications précédentes, **caractérisé en ce que** la pièce en matière plastique (1) présente des paires de conducteurs électriques chauffants par effet Joule (3) qui sont reliés entre eux de manière électroconductrice à des points de liaison (4) et qui sont composés de matériaux différents, de sorte qu'ils forment des thermocouples qui sont utilisables pour mesurer des températures aux points de liaison (4).

6. Procédé selon une des revendications précédentes, **caractérisé en ce que** les conducteurs chauffants (3) sont torsadés.

7. Procédé selon une des revendications précédentes, **caractérisé en ce qu'**un conducteur chauffant (3) est un fil (2).

8. Procédé selon une des revendications 1 à 7, **caractérisé en ce qu'**un conducteur chauffant (3) est une piste conductrice (7).
